# EUROPEAN PATENT APPLICATION

(11) **EP 4 633 205 A1**
(43) Date of publication of application: **15.10.2025**
(21) Application number: 24170044.2
(22) Date of filing: 12.04.2024
(51) Int. Cl.: H04S 7/00, G10L 19/008

(54) **SEPARATION OF BINAURAL DOWNMIX AND HEAD TRACKING FOR AUDIO SYSTEMS**

(71) Applicant: Bang & Olufsen A/S, 7600 Struer (DK)
(72) Inventor: SCHEUREGGER, Oliver, 2500, Valby (DK)
(74) Representative: D Young & Co LLP

(57) **Abstract**

Techniques for separating binaural downmixing and head tracking processing between a source device and an output device are described. Embodiments include receiving, by a source device, an audio signal comprising a plurality of channels and selecting a first subset of the plurality of channels as head-tracked channels. Embodiments include performing, by the source device, binaural downmixing on a second subset of the plurality of channels that is different than the first subset of the plurality of channels to produce a downmixed second subset of the plurality of channels. Embodiments include transmitting, by the source device, the first subset of the plurality of channels and the downmixed second subset of the plurality of channels to an output device. Embodiments include performing, by the output device, binaural downmixing on the first subset of the plurality of channels based on positional data captured via one or more sensors associated with the output device.

## Description

### FIELD

The present disclosure generally relates to audio processing techniques, and more specifically but not exclusively, to techniques for separating binaural downmixing and head tracking processing between a source device and an output device for efficiently producing head-tracked binaurally processed audio even in wireless audio systems.

### BACKGROUND

Simulation of multichannel audio formats (e.g., audio formats having more than two channels, such as 5.1, 7.1, and/or the like) over headphones may be achieved using binaural processing. Binaural processing, such as binaural downmixing, generally involves combining audio signals from more than two channels into a two-channel (e.g., stereo) format, maintaining spatial perception for headphone listeners. Binaural processing aims to recreate a three-dimensional sound experience in two channels, simulating the way humans perceive sound in the real world. However, it is not possible to transmit multichannel audio formats wirelessly using any existing standardized protocols. Therefore, if a binaural downmix of multichannel audio is required, current techniques involve performing binaural processing on a source device prior to transmitting audio data to an output device such as headphones.

Many wearable output devices such as headphones are equipped with sensors that allow for positional data related to movement of a listener's head to be captured. For example, headphones may comprise an inertial measurement unit (IMU) that captures head-tracking data such as yaw, pitch, and roll data. Such head-tracking data may allow audio to be adapted based on the listener's head position to simulate the experience of moving around a three-dimensional space. For example, head-tracking data may be used during binaural processing to create such an effect. However, processing of audio based on head-tracking data should be kept as close as possible to the listener's head (e.g., on the headphones themselves), as latency tolerances for head-tracking are very low. Latency is here defined as the time delay (often referred to as *lag*) between a listener moving their head and perceiving the updated signals corresponding to the (rotated) signals. Latency discrimination thresholds are highly dependent on the specifics of the virtual auditory processing system and how the user interacts with it. However, a general rule of thumb is that latency should be below 60 milliseconds (ms) for most users and latencies below 30 ms will be undetectable by most users under most circumstances. If latencies are too high, this can lead to an unpleasant auditory experience for the listener which worsens as the latency increases. Sending head-tracking data over a wireless protocol using existing techniques generally introduces too much round-trip latency to keep the overall latency below perceptual thresholds.

Thus, because existing binaural processing techniques are generally performed prior to transmitting audio data to headphones via a wireless protocol due to the channel limitations of such protocols, and because existing head-tracking techniques are generally performed on the headphones due to latency limitations related to head-tracking, prior techniques are not amenable to performing binaural processing with head-tracking in a wireless context.

### SUMMARY

Particular aspects are set out in the appended independent claims. Various optional embodiments are set out in the dependent claims.

One embodiment described herein is a method performed by a computing device. The computer-implemented method includes: receiving, by a source device, an audio signal comprising a plurality of channels; selecting, by the source device, a first subset of the plurality of channels as head-tracked channels based on a channel selection rule; performing, by the source device, binaural downmixing on a second subset of the plurality of channels that is different than the first subset of the plurality of channels to produce a downmixed second subset of the plurality of channels; transmitting, by the source device, the first subset of the plurality of channels and the downmixed second subset of the plurality of channels to an output device; performing, by the output device, binaural downmixing on the first subset of the plurality of channels based on positional data captured via one or more sensors associated with the output device to produce a downmixed first subset of the plurality of channels; and playing, by the output device, audio content based on the downmixed first subset of the plurality of channels and the downmixed second subset of the plurality of channels.

Another embodiment described herein is a computing device. The computing device includes a processor and a memory. The memory stores instructions, which when executed on the processor perform an operation. The operation includes receiving, by a source device, an audio signal comprising a plurality of channels; selecting, by the source device, a first subset of the plurality of channels as head-tracked channels based on a channel selection rule; performing, by the source device, binaural downmixing on a second subset of the plurality of channels that is different than the first subset of the plurality of channels to produce a downmixed second subset of the plurality of channels; transmitting, by the source device, the first subset of the plurality of channels and the downmixed second subset of the plurality of channels to an output device; performing, by the output device, binaural downmixing on the first subset of the plurality of channels based on positional data captured via one or more sensors associated with the output device to produce a downmixed first subset of the plurality of channels; and playing, by the output device, audio content based on the downmixed first subset of the plurality of channels and the downmixed second subset of the plurality of channels.

Another embodiment described herein is a computer-readable medium. The computer-readable medium includes computer executable code, which when executed by one or more processors, performs an operation. The operation includes receiving, by a source device, an audio signal comprising a plurality of channels; selecting, by the source device, a first subset of the plurality of channels as head-tracked channels based on a channel selection rule; performing, by the source device, binaural downmixing on a second subset of the plurality of channels that is different than the first subset of the plurality of channels to produce a downmixed second subset of the plurality of channels; transmitting, by the source device, the first subset of the plurality of channels and the downmixed second subset of the plurality of channels to an output device; performing, by the output device, binaural downmixing on the first subset of the plurality of channels based on positional data captured via one or more sensors associated with the output device to produce a downmixed first subset of the plurality of channels; and playing, by the output device, audio content based on the downmixed first subset of the plurality of channels and the downmixed second subset of the plurality of channels.

The following description and the appended figures set forth certain features for purposes of illustration.

### BRIEF DESCRIPTION OF DRAWINGS

Various embodiments in accordance with the present disclosure will be described with reference to the drawings, where like designations denote like elements. Note that the appended drawings illustrate typical embodiments and are therefore not to be considered limiting; other equally effective embodiments are contemplated.
**FIG. 1** illustrates an example computing environment for separating binaural downmixing and head tracking processing between a source device and an output device, according to one embodiment.
**FIG. 2** illustrates an example workflow for separating binaural downmixing and head tracking processing between a source device and an output device, according to one embodiment.
**FIG. 3** illustrates another example workflow for separating binaural downmixing and head tracking processing between a source device and an output device, according to one embodiment.
**FIG. 4** is a flowchart of a method for separating binaural downmixing and head tracking processing between a source device and an output device, according to one embodiment.
**FIG. 5** is a block diagram of an example computing system related to separating binaural downmixing and head tracking processing between a source device and an output device, according to one embodiment.

### DETAILED DESCRIPTION

Embodiments described herein provide techniques for separating binaural downmixing and head tracking processing between a source device and an output device such as headphones in order to enable simulation of head-tracked multichannel audio formats over headphones.

According to certain embodiments, channels of a multichannel audio signal are separated into head-tracked channels and fixed channels (e.g., that are not head-tracked), and the fixed channels are binaurally processed on the source device while the head-tracked channels are binaurally processed with head-tracking on the output device. For example, in order to achieve a head-tracked effect, it may not be necessary to apply head-tracking to all channels. Thus, a head-tracked effect may be achieved by pre-applying a binaural downmix to the fixed channels of a multi-channel audio signal on the source device and transmitting the pre-downmixed audio along with the head-tracked channels to the output device so that head-tracking can be applied during a binaural downmix of the head-tracked channels on the output device.

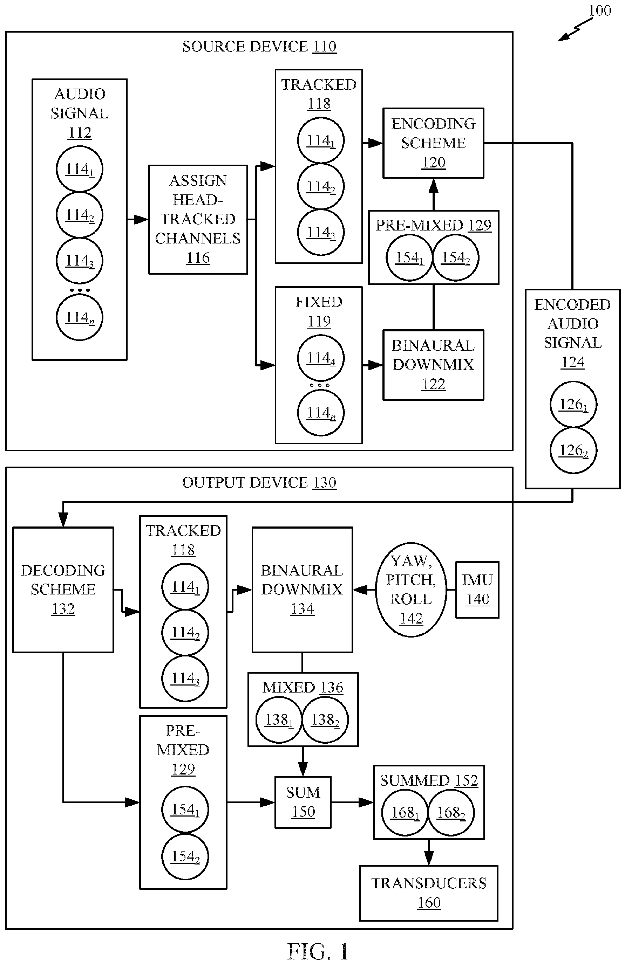

As described in more detail below with respect to **FIG. 1****,** channels may be separated into head-tracked channels and fixed channels based on rules, such as relating to particular multichannel configurations. For example, a rule may indicate that if a multichannel audio signal corresponds to a specific configuration (e.g., 5.1, 7.1, or the like), then one or more particular channels within the signal are to be designated as head-tracked while a different one or more particular channels within the signal are to be designated as fixed.

Furthermore, as described in more detail below with respect to **FIGs. 1-3****,** the pre-downmixed audio and the head-tracked channels may be encoded together into a given number of channels (e.g., two channels) for transmission to the output device. For example, many wireless transmission protocols support only two channels of simultaneous transmission. Thus, in order to transport the channels designated as head-tracked channels along with the pre-downmixed audio (which will have been downmixed to two channels already) in two channels, various encoding techniques may be employed. For instance, as described in more detail below, such encoding techniques may include interleaving, bit splitting, mid side encoding, Stereo Quadraphony (SQ), and/or the like.

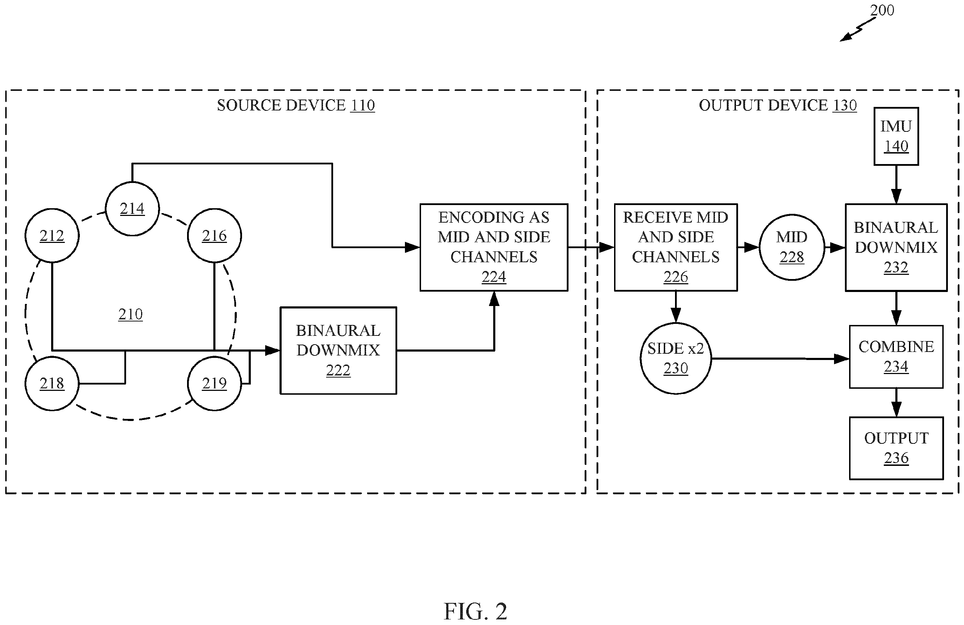

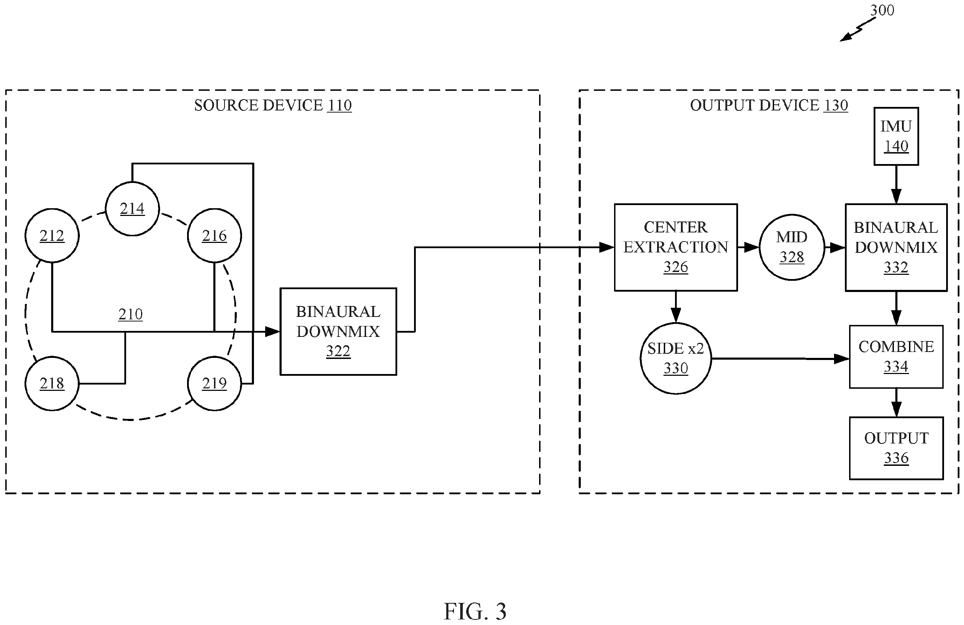

In some embodiments, described in more detail below with respect to **FIGs. 2** and **3****,** the output device may perform decoding, center extraction, and/or other processing in order to separate the pre-downmixed audio from the head-tracked channels. The output device may then utilize head-tracking data such as yaw, pitch, and/or roll data captured by an inertial measurement unit (IMU) associated with the output device to perform head-tracked binaural downmixing to the head-tracked channels. The downmixed head-tracked channels may be aggregated with the pre-downmixed audio (e.g., the left channel of the downmixed head-tracked channels may be summed with the left channel of the pre-downmixed audio and the right channel of the downmixed head-tracked channels may be summed with the right channel of the pre-downmixed audio) for playing via the headphones.

Embodiments described herein provide various technical improvements with respect to conventional techniques for binaurally downmixing audio content for playing via headphones. For example, by separating channels of a multichannel audio signal into one or more head-tracked channels and one or more fixed channels, techniques described herein allow binaural processing to be performed for some channels of an audio signal at a source device prior to transmission to an output device, thereby reducing the load at the output device while still performing binaural processing with head-tracking for one or more head-tracked channels at the output device to enable a seamless virtualized head-tracked three-dimensional sound experience. Thus, embodiments described herein allow binaural processing with head tracking to be performed on the output device and therefore avoid the round-trip latency issues that would otherwise be introduced by transmitting head-tracking data to a source device for binaural processing with head tracking to be performed on the source device, while also avoiding the load on the output device that would otherwise be introduced by binaurally processing all channels on the output device.

Furthermore, by encoding pre-downmixed audio along with channels that are to be head-tracked together into a given number of channels (e.g., two channels) for transmission to an output device, techniques described herein overcome the technical challenge presented by the channel limitations on many transmission methods such as wireless transmission protocols. Embodiments described herein enable a computing device to do what it could not do before by allowing a computer to perform binaural processing with head-tracking in a wireless context in a performant manner without exceeding the latency threshold above which head-tracking does not function well. Additionally, even in contexts without such channel limitations on transmission, such as wired headphones or proprietary multichannel wireless transmission protocols, techniques described herein reduce load that would otherwise occur on the output device if all channels were binaurally processed on the output device, thereby improving performance. For example, the computational cost of performing binaural processing increases (often in a linear fashion) with the number of input channels to be processed, so reducing the number of channels for which binaural processing is performed on the output device reduces the computational cost at the output device accordingly.

**FIG. 1** illustrates an example computing environment 100 for separating binaural downmixing and head tracking processing between a source device 110 and an output device 130, according to one embodiment.

Source device 110 may, for example, be a computing device such as a desktop computer, laptop computer, tablet, mobile phone, and/or the like. Output device 130 may, for example, be headphones that are connected to source device 110 via a wireless or wired connection. In one embodiment, output device 130 is connected to source device 110 via a wireless protocol such as a Bluetooth^{®} connection.

An audio signal 112 comprises a multichannel audio signal including channels 114_{1-*n*} (which may collectively be referred to as channels 114 or individually as channel 114). For example, if audio signal 112 is a seven channel surround sound audio signal (e.g., 7.1), then n may be equal to seven. At block 116, source device 110 assigns a subset of channels 114 as head-tracked channels. For example, source device 110 may apply one or more rules in order to determine which of channels 114 to designate as head-tracked channels and which of channels 114 to designate as fixed channels. The one or more rules may be based on a configuration of audio signal 112, such as a type of channel configuration of audio signal 112. For example, a rule may specify which channels are to be designated as head-tracked channels for seven-channel surround sound audio signals.

A first subset of channels 114 is designated as head-tracked channels 118, while a second subset of channels 114 is designated as fixed channels 119. For example, head-tracked channels 118 may include channels 114₁ and 114₂, while fixed channels 119 may include channels 114_{3-*n*}. These channels are included as examples, and different subsets of channels may alternatively be selected as head-tracked or fixed channels.

Fixed channels 119 are binaurally downmixed at box 122 on source device 110. For example, binaural downmixing performed at block 122 may involve combining audio data from all of channels 114_{3-*n*} into a two-channel (e.g., stereo) format while maintaining spatial perception to create a virtual three-dimensional sound space in two channels. In certain embodiments, head-tracking is not used at block 122, as block 122 constitutes a pre-downmixing of fixed channels that are designated as head-tracked channels, and is performed at source device 110 rather than output device 130. In some embodiments, a head-related transfer function (HRTF) is assigned to each channel in connection with the binaural downmix at block 122, and the HRTF corresponds to that channel's spatial location in a speaker array.

The binaural downmix at block 122 may produce pre-mixed audio data 129, which includes audio in two channels 154₁ and 154₂, which may correspond to a left speaker and a right speaker.

Pre-mixed audio data 129 may then be transmitted along with head-tracked channels 118 to output device 130. However, there may be channel limitations associated with transmitting audio data to output device 130, such as a limit of two channels that is associated with many wireless communication protocols. As such, an encoding scheme 120 may be used to encode pre-mixed audio data 129 and head-tracked channels 118 into an encoded audio signal 124 that includes two channels 126₁ and 126₂ for transmission (e.g., wirelessly) to output device 130.

Encoding scheme 120 may include any of a variety of different types of encoding techniques that may be used to encode multiple channels of audio data into a given number of channels such as two channels. For example, as described in more detail below with respect to **FIG. 2****,** encoding scheme 120 may involve mid-side encoding, where the mid channel generally includes the sum of a left channel and a right channel and the side channel generally includes the differences between the left channel and the right channel. The side signal is generally a one-channel signal that contains the difference between left and right inputs, while the mid signal is generally a one-channel signal that contains the commonalities between the left and right inputs.

Encoding in mid-side encoding may be defined as M = (L + R) and S = (L - R). Conversely, decoding may be defined as L = (M + S)/2 and R = (M - S)/2, where M is the mid signal, S is the side signal, L is the left input, and R is the right input.

Mid-side encoding is useful even for signals containing more than two channels. For example, when the input signal corresponds to a surround sound configuration (5.1, 7.1, etc.), channels 1-3 correspond to left, right, and center, respectively. These channels are typically of most relevance for a head-tracked system, while the surround channels merely provide a sense of envelopment/immersion. Therefore, mid-side encoding may be used to encode three channels into two, which may be defined as M = L + R + C and S = L - R, where M is the mid signal, S is the side signal, L is the left input, R is the right input, and C is the center input.

In one embodiment, head-tracked channels 118 may be encoded as a mid channel (e.g., which may be represented in an embodiment by channel 126₁) and pre-mixed audio data 129 may be encoded as a side channel (e.g., which may be represented in an embodiment by channel 126₂). In such an embodiment, the mid and side channels can be received at output device 130 without any additional logic to decode the signals (e.g., at decoding scheme 132), and the mid channel can be binaurally downmixed with head-tracking on output device 130 while the side channel may be duplicated across two channels and summed with the result of the binaural downmix with head-tracking that is performed on the mid channel. In other embodiments, mid-side encoding may be used in a different configuration to transmit head-tracked channels 118 and pre-mixed audio data 129 to output device 130.

Other encoding techniques may include Stereo Quadraphony (SQ), bit splitting, interleaving, and/or the like. SQ generally involves encoding four sound channels (e.g., forward left, forward right, back left, and back right) down to two channels (e.g., left and right), which can then be decoded back to four channels. The fidelity of the decoded channels relative to the four encoded channels generally depends on the coherence/correlation between the four encoded channels, and so SQ encoding may be most suitable in cases of high coherence/correlation between the four channels to be encoded. An SQ encoding may be defined as Lt = left total signal = L - Lr(-3dB, -90° phase shift) + Rr(-3dB) and Rt = right total signal = R - Lr(-3dB, 180° phase shift) + Rr(-3dB), where L = left input signal, Lr = left rear input signal, R = right input signal, and Rr = right rear input signal.

Subsequently, SQ decoding may be defined as: L = Lt, Lr = Lt(-90° phase shift) + Rt(-3dB, -180° phase shift), R = Rt, and Rr = Rt(-90° phase shift) + Lt(-3dB).

Bit splitting generally involves dividing the channel/bit-depth that is supported by the transmission method in order to carry additional channels at a lower bit-rate. For example, if a transmission protocol supports two 24-bit channels, then more than two channels could be sent at a lower bit-rate by sending less than 24 bits of a given channel at a time and using the additional bits to send part of a different channel. In one embodiment, a first channel is sent using 16 bits of a first 24-bit transmission channel, a second channel is sent using 16 bits of a second 24-bit transmission channel, and a third channel is sent using the additional 8 bits of the first 24-bit transmission channel and the additional 8 bits of the second 24-bit transmission channel. Other divisions of channels across the available channels and bits for transmission are possible. Such a technique may be suitable for cases where a full (e.g., 24-bit) dynamic range is less important, such as where quality is less highly prioritized.

Interleaving is a similar concept to bit splitting, but leverages the available sampling rate rather than bit-depth. In one embodiment, a transmission protocol supports two channels at 96 kilohertz (kHz) per channel, and interleaving may involve transmitting four channels at 48kHz each over a 96 kHz codec. The audio quality benefits of 96kHz are generally minimal and 48kHz typically offers more than enough frequency range for human hearing. Thus, four channels may be sent by interleaving samples from the four channels and sending the interleaved samples at 48 kHz, but in a 96 kHz container.

In some cases, multiple encoding techniques may be combined at encoding scheme 120. Mid-side encoding and SQ encoding, for instance, may be combined in order to encode more than four channels down to two channels. Similarly, bit-splitting and interleaving may also be combined to make more efficient use of the available data rate for the given audio quality requirements and the benefits that transmission of more than two discrete channels of audio offers for dynamic binaural processing.

In an example, an audio signal may include five or more channels, such as a multichannel surround sound configuration (e.g., 5.1, 7.1, or the like). It may be determined that channels 1-3 (e.g., channels 114₁₋₃) are head-tracked channels (e.g., because, in surround sound configurations, these channels generally include diegetic information pertinent to visual cues in a movie or represent key audio elements in a music), such as based on a channel selection rule. Channel 4 (e.g., channel 114₄) may be ignored or embedded across all channels in some embodiments according to a bass management system, as this channel generally transports the low frequency effects (LFE) channel. Channels 5 and on (e.g., channels 114_{5-*n*}) generally represent surround information to create a sense of envelopment/immersion, and may be determined to be fixed channels, such as according to a channel selection rule.

Thus, in such an example, encoding scheme 120 may involve encoding channels 1-3 using mid-side encoding to produce two channels (e.g., mid and side). Binaural downmix 122 may be performed on channels 4-*n* or channels 5-*n* (e.g., if channel 4 is ignored or encoded embedded across all channels) to produce two channels (e.g., channels 154₁ and 154₂). Then, the mid channel and side channel produced through the mid-side encoding and the two channels produced by binaural downmix 122 (e.g., a total of four channels) may be encoded using SQ encoding to produce two channels (e.g., channels 126₁ and 126₂). The two channels may then be decoded at decoding scheme 132 on output device 130 using SQ decoding to produce the four channels: the mid channel and side channel (e.g., which, together represent channels 114₁₋₃) and the two channels 154₁ and 154₂ produced through the pre-downmixing. Binaural downmix 134 may then be applied to the mid and side channels using head-tracking (e.g., based on yaw, pitch, and roll data 142 captured via IMU 140) to produce downmixed audio data 136 (e.g., including channels 138₁ and 138₂). Alternatively, the mid and side channels may be decoded to channels 114₁₋₃ and then binaural downmix 134 with head-tracking may be applied to channels 114₁₋₃. Then, downmixed channels 136 may be combined with pre-downmixed channels 129 at block 150 (e.g., these channels may be summed with one another) to produce summed audio data 152 (e.g., including channels 168₁ and 168₂). Summed audio data 152 may then be played through the headphones (e.g., via transducers 160).

IMU 140 may include an accelerometer, gyroscope, and/or magnetometer, and may capture data related to movements of a listener's head, such as in the form of yaw, pitch, and/or roll data. In some embodiments IMU 140 is embedded within output device 130. For example, output device 130 may be a set of headphones, and IMU 140 may be included within and/or attached to the set of headphones.

The example set forth above involving a combination of mid-side encoding and SQ encoding provides certain advantages, as the mid and side channels will be well separated by the decoder from the pre-downmixed channels. Further, bleeding of the pre-downmixed channels into the mid and/or side channel may be mitigated by attenuating one or more of the decoded pre-downmixed channels by a certain amount of gain.

In some embodiments, metadata may be sent by output device 130 to source device 110 indicating whether head-tracking and/or IMU 140 is enabled on output device 130, thereby allowing source device 110 to determine whether to perform the techniques described herein (e.g., whether to select certain channels as head-tracked and divide binaural processing between the source device and the output device) or, alternatively, whether to perform all binaural processing on source device 110, based on the metadata. For example, techniques described herein for separating binaural processing between a source device and an output device may be performed if metadata indicates that head-tracking and/or IMU 140 is enabled, while a different technique (e.g., performing all binaural processing on source device 110) may be performed if metadata indicates that head-tracking and/or IMU 140 is not enabled.

In certain embodiments, encoding scheme 120 is selected (e.g., dynamically) based on a channel configuration of audio signal 112 (e.g., according to one or more encoding scheme selection rules that define mappings between encoding schemes and channel configurations and/or attributes of channel configurations). In some embodiments, the encoded audio signal 124 comprises a number of channels equal to or less than a maximum number of channels supported by an applicable transmission technique (e.g., transmission via a wireless protocol).

**FIG. 2** illustrates an example workflow 200 for separating binaural downmixing and head tracking processing between a source device and an output device, according to one embodiment.

Workflow 200 represents an example where only one channel 214 of a five-channel audio signal 210 is determined to be a head-tracked channel. For example, a channel selection rule may indicate that for audio signals of a type corresponding to audio signal 210 the center channel (e.g., channel 214) is to be head-tracked, while the other channels (e.g., channels 212, 216, 218, and 219) are to be fixed. Thus, a binaural downmix 222 may be performed on the fixed channels 212, 216, 218, and 219 on source device 110 prior to transmission to output device 130, without performing head-tracking on these channels. Binaural downmix 222 may produce two channels.

Head-tracked channel 214 and the two channels produced by binaural downmix 222 may be encoded as mid and side signals at block 224 using mid-side encoding. For example, block 224 may involve using head-tracked channel 214 as the mid channel and encoding the two channels produced by binaural downmix 222 as a single side channel. In some embodiments, scaling is performed so that the mid channel is more dominant and therefore easier to extract at output device 130. For example, performing mid-side encoding may include scaling head-tracked channel 214 up and scaling the two channels produced by binaural downmix 222 down within the mid and side channels. The mid and side channels may then be transmitted from source device 110 to output device 130, such as via a wireless transmission protocol.

At block 226, the mid and side channels produced by block 224 are received on output device 130. Decoding logic may not be needed to decode the mid and side channels in certain embodiments, as these channels may be used as-is on output device 130. A binaural downmix 232 may be performed on the mid channel 228 with head-tracking based on head-tracking data from IMU 140 on output device 130 to produce two downmixed channels. The side channel may be duplicated across two channels (e.g., left and right), and these two channels (e.g., duplicated side channel 230) may be combined at block 234 with the downmixed two channels produced by binaural downmix 232. For example, block 234 may involve summing the duplicated side channel 230 with the downmixed two channels produced by binaural downmix 232. Alternatively, rather than duplicating the side channel, decoding may be performed to separate the side channel back into two independent channels, such as corresponding to the two channels that were originally produced on source device 110 by binaural downmix 222, and those two independent channels may be combined at block 234 with the downmixed two channels produced by binaural downmix 232. The result of a combination performed at block 234 may be output at block 236, such as via headphone speakers.

It is noted that workflow 200 depicts one example, and other embodiments may involve different channel configurations, different channels selected as head-tracked, different encoding techniques (and corresponding decoding techniques), and/or the like.

In an alternative embodiment, if multiple channels are designated as head-tracked channels, a mono downmix may be applied to the head-tracked channels, and the one channel resulting from the mono downmix may be used as the mid channel in the mid-side encoding. In such an embodiment, a mono to stereo upmix (or an upmix that converts mono to more than two channels) may be performed at output device 130 on the mid channel before performing a binaural downmix with head-tracking at output device 130 on the (upmixed) mid channel, or the mid channel be binaurally downmixed with head-tracking without first performing upmixing.

In another embodiment, regardless of the configuration of an audio signal, the audio signal may be processed through a source separation algorithm to extract one or more particular components (e.g., vocals, dialogue, and/or the like), and the one or more particular components may be designated as head-tracked, while rest of the audio signal may be designated as fixed. This may be particularly applicable for video and/or television content in which the head-tracked component is typically the speech or dialogue.

**FIG. 3** illustrates another example workflow 300 for separating binaural downmixing and head tracking processing between a source device and an output device, according to one embodiment.

Workflow 300 represents another example where only one channel 214 of a five-channel audio signal 210 is determined to be a head-tracked channel. For example, a channel selection rule may indicate that for audio signals of a type corresponding to audio signal 210 the center channel (e.g., channel 214) is to be head-tracked, while the other channels (e.g., channels 212, 216, 218, and 219) are to be fixed. However, rather than performing a binaural downmix only on the fixed channels on source device 110, as in workflow 200 described above with respect to **FIG. 2****,** workflow 300 involves performing a binaural downmix 322 on all five channels 212, 214, 216, 218, and 219 without head-tracking on source device 110. In such an embodiment, no additional encoding is needed prior to transmission, as binaural downmix 322 produces two channels that can be transmitted to output device 130 (e.g., via a wireless transmission protocol) even with a transmission channel limit of two.

When the two channels produced by binaural downmix 322 are received on output device 130, center extraction may be performed on the two channels at block 326. For example, center extraction may involve extracting a mid channel 328 and a side channel from the two channels produced by binaural downmix 322. A binaural downmix 332 may be performed on the mid channel 328 with head-tracking based on head-tracking data from IMU 140 on output device 130 to produce two downmixed channels. The side channel may be duplicated across two channels (e.g., left and right), and these two channels (e.g., duplicated side channel 330) may be combined at block 334 with the downmixed two channels produced by binaural downmix 332. For example, block 334 may involve summing the duplicated side channel 330 with the downmixed two channels produced by binaural downmix 332. The result of a combination performed at block 334 may be output at block 336, such as via headphone speakers.

It is noted that workflow 300 depicts one example, and other embodiments may involve different channel configurations, different channels selected as head-tracked, different encoding techniques (and corresponding decoding techniques), and/or the like.

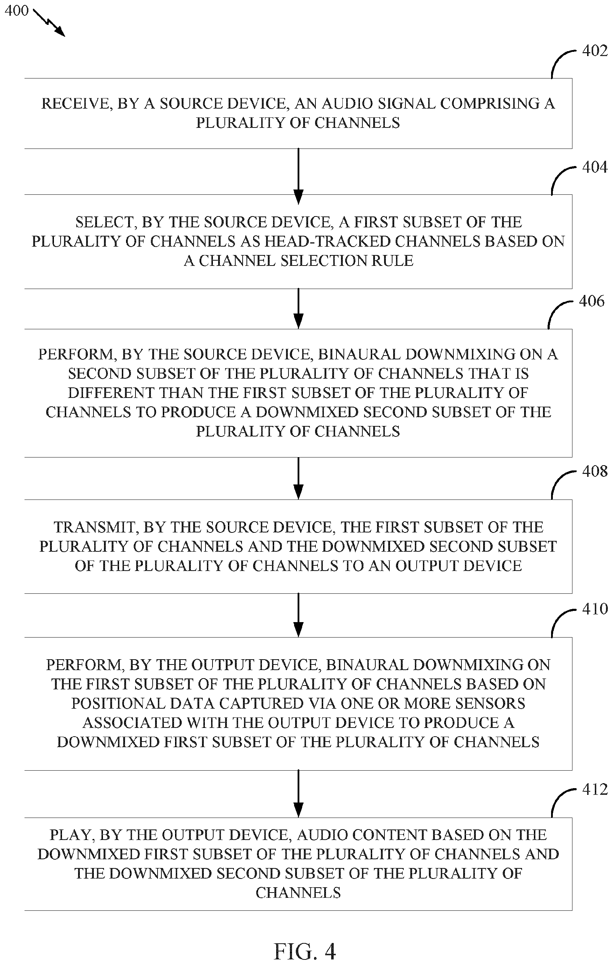

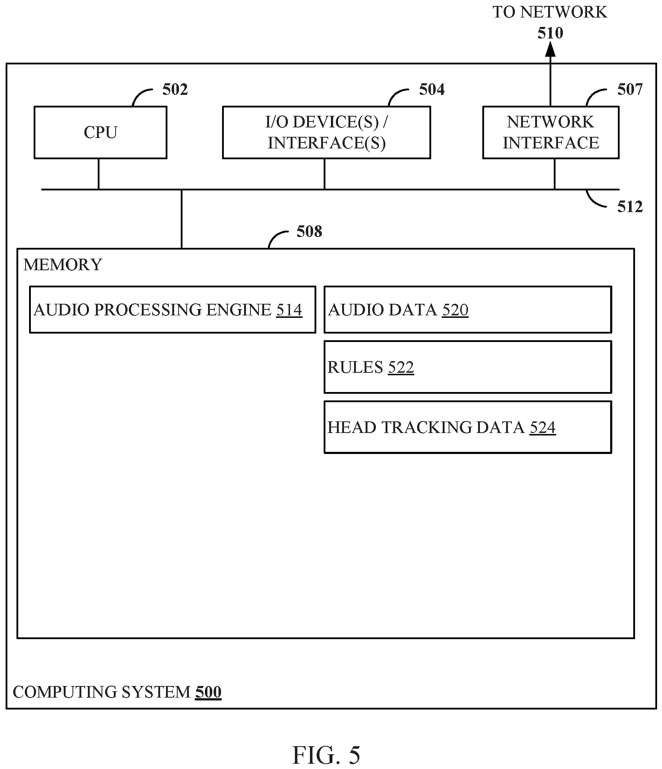

**FIG. 4** is a flowchart 400 of a method for separating binaural downmixing and head tracking processing between a source device and an output device, according to one embodiment. For example, the method depicted in flowchart 400 may be performed by one or more computing applications running on one or more computing devices, such as source device 110 and/or output device 130 of **FIGs. 1-3****,** and/or computing system 500 of **FIG. 5****,** described below (which may be representative of source device 110 and/or output device 130 of **FIGs. 1-3**).

The method may begin at block 402, with receiving, by a source device, an audio signal comprising a plurality of channels.

The method may continue at block 404, with selecting, by the source device, a first subset of the plurality of channels as head-tracked channels based on a channel selection rule.

In some embodiments, the channel selection rule relates to a channel configuration of the plurality of channels.

The method may continue at block 406, with performing, by the source device, binaural downmixing on a second subset of the plurality of channels that is different than the first subset of the plurality of channels to produce a downmixed second subset of the plurality of channels.

The method may continue at block 408, with transmitting, by the source device, the first subset of the plurality of channels and the downmixed second subset of the plurality of channels to an output device.

The method may continue at block 410, with performing, by the output device, binaural downmixing on the first subset of the plurality of channels based on positional data captured via one or more sensors associated with the output device to produce a downmixed first subset of the plurality of channels.

The method may continue at block 412, with playing, by the output device, audio content based on the downmixed first subset of the plurality of channels and the downmixed second subset of the plurality of channels.

In certain embodiments, the output device comprises processing-capable headphones, and the one or more sensors comprise an accelerometer, gyroscope, and/or magnetometer associated with the processing-capable headphones.

Some embodiments further comprise aggregating the downmixed first subset of the plurality of channels and the downmixed second subset of the plurality of channels to produce the audio content.

Certain embodiments further comprise encoding, by the source device, the first subset of the plurality of channels and the downmixed second subset of the plurality of channels using an encoding scheme to produce encoded audio content. For example, the transmitting, by the source device, the first subset of the plurality of channels and the downmixed second subset of the plurality of channels to the output device may comprise transmitting the encoded audio content. Some embodiments further comprise decoding, by the output device, encoded audio content based on the encoding scheme in order to determine the first subset of the plurality of channels and the downmixed second subset of the plurality of channels.

Certain embodiments further comprise selecting the encoding scheme based on a channel configuration of the plurality of channels. In some embodiments, the encoded audio content comprises a number of channels equal to or less than a maximum number of channels supported by a transmission technique that is used for the transmitting, by the source device, the first subset of the plurality of channels and the downmixed second subset of the plurality of channels to the output device. In certain embodiments, the applicable transmission technique comprises a wireless transmission technique.

**FIG. 5** is a block diagram of an example computing system 500 related to separating binaural downmixing and head tracking processing between a source device and an output device, according to one embodiment. For example, system 500 may represent source device 110 and/or output device 130 of **FIGs. 1-3****.**

In certain embodiments, computing system 500 performs techniques described herein related to separating binaural downmixing and head tracking processing between a source device and an output device, such as the method depicted and described above with respect to flowchart 400 of **FIG. 4****.**

Computing system 500 includes a central processing unit (CPU) 502 connected to a data bus 512. CPU 502 may be configured to process computer-executable instructions, e.g., stored in memory 508, and to cause computing system 500 to perform methods as described herein, for example with respect to **FIG. 4****.** Though depicted as including one CPU 502, computing system 500 may alternatively have a single processor or a plurality of processors.

Computing system 500 further includes input/output device(s) and interface(s) 504, which allows computing system 500 to interface with input/output devices, such as, for example, keyboards, displays, mouse devices, pen input, speakers, IMUs, and/or other devices that allow for interaction with computing system 500. Note that while not depicted with independent external I/O devices, computing system 500 may connect with external I/O devices through physical and wireless connections (e.g., an external display device, external speakers, and/or the like). While not shown, computing system 500 may include an accelerometer, gyroscope, and/or magnetometer, such as in an IMU.

Computing system 500 further includes network interface 507, which provides computing system 500 with access to external networks, such as network 510 (e.g., the Internet, a local area network, or another type of network over which data may be transmitted), and thereby external computing devices.

Computing system 500 further includes memory 508, which may be representative of a random access memory or the like. In some embodiments, the memory 508 may include a disk drive, solid state drive, or a collection of storage devices distributed across multiple storage systems. Although shown as a single unit, the memory 508 may be a combination of fixed and/or removable storage devices, such as fixed disc drives, removable memory cards or optical storage, network attached storage (NAS), or a storage area-network (SAN).

In this example, memory 508 includes audio processing engine 514, which may perform certain aspects of operations described above with respect **FIG. 1-4****,** such as operations 400 of **FIG. 4** and/or operations described with respect to **FIGS. 1-3****.**

Additionally, memory 508 includes audio data 520, which may include, for example, audio signal 112, head-tracked channels 118, fixed channels 119, pre-downmixed audio data 129, encoded audio signal 124, downmixed audio data 136, and/or summed audio data 152 of **FIG. 1****,** audio signal 210, mid channel 228, and/or duplicated side channel 230 of **FIG. 2****,** and/or mid channel 328 and/or duplicated side channel 330 of **FIG. 3****.** Memory 508 further includes rules 522, which may include channel selection rules and/or encoding scheme selection rules applied by audio processing engine 514 in order to select channels as head-tracked or fixed and select one or more encoding schemes for encoding audio for transmission to an output device, as described above with respect to **FIGs. 1-4****.** Memory 508 further includes head tracking data 524, which may include yaw, pitch, and roll data 142 produced by IMU 140 of **FIG. 1****,** and/or other positional data used for head-tracking as described herein.

Note that while shown as a single memory 508 in **FIG. 5** for simplicity, the aspects stored in memory 508 may be stored in different physical memories, but all accessible to CPU 502 via data connections, such as bus 512.

While not depicted in **FIG. 5****,** other aspects may be included in memory 508.

### Example Clauses

Implementation examples are described in the following numbered clauses:

Clause 1: A method performed by a computing device, comprising: receiving, by a source device, an audio signal comprising a plurality of channels; selecting, by the source device, a first subset of the plurality of channels as head-tracked channels based on a channel selection rule; performing, by the source device, binaural downmixing on a second subset of the plurality of channels that is different than the first subset of the plurality of channels to produce a downmixed second subset of the plurality of channels; transmitting, by the source device, the first subset of the plurality of channels and the downmixed second subset of the plurality of channels to an output device; performing, by the output device, binaural downmixing on the first subset of the plurality of channels based on positional data captured via one or more sensors associated with the output device to produce a downmixed first subset of the plurality of channels; and playing, by the output device, audio content based on the downmixed first subset of the plurality of channels and the downmixed second subset of the plurality of channels.

Clause 2: The computer-implemented method of Clause 1, wherein the channel selection rule relates to a channel configuration of the plurality of channels.

Clause 3: The computer-implemented method of any one of Clause 1-2, wherein the output device comprises processing-capable headphones, and wherein the one or more sensors comprise an accelerometer, gyroscope, or magnetometer associated with the processing-capable headphones.

Clause 4: The computer-implemented method of any one of Clause 1-3, further comprising aggregating the downmixed first subset of the plurality of channels and the downmixed second subset of the plurality of channels to produce the audio content.

Clause 5: The computer-implemented method of any one of Clause 1-4, further comprising encoding, by the source device, the first subset of the plurality of channels and the downmixed second subset of the plurality of channels using an encoding scheme to produce encoded audio content, wherein the transmitting, by the source device, the first subset of the plurality of channels and the downmixed second subset of the plurality of channels to the output device comprises transmitting the encoded audio content.

Clause 6: The computer-implemented method of Clause 5, further comprising decoding, by the output device, encoded audio content based on the encoding scheme in order to determine the first subset of the plurality of channels and the downmixed second subset of the plurality of channels.

Clause 7: The computer-implemented method of any one of Clause 5-6, further comprising selecting the encoding scheme based on a channel configuration of the plurality of channels.

Clause 8: The computer-implemented method of any one of Clause 5-7, wherein the encoded audio content comprises a number of channels equal to or less than a maximum number of channels supported by a transmission technique that is used for the transmitting, by the source device, the first subset of the plurality of channels and the downmixed second subset of the plurality of channels to the output device.

Clause 9: The computer-implemented method of Clause 8, wherein the transmission technique comprises a wireless transmission technique.

Clause 10: A system, comprising: one or more processors; and a memory storing instructions that, when executed by the one or more processors, cause the system to: receive, by a source device, an audio signal comprising a plurality of channels; select, by the source device, a first subset of the plurality of channels as head-tracked channels based on a channel selection rule; perform, by the source device, binaural downmixing on a second subset of the plurality of channels that is different than the first subset of the plurality of channels to produce a downmixed second subset of the plurality of channels; transmit, by the source device, the first subset of the plurality of channels and the downmixed second subset of the plurality of channels to an output device; perform, by the output device, binaural downmixing on the first subset of the plurality of channels based on positional data captured via one or more sensors associated with the output device to produce a downmixed first subset of the plurality of channels; and play, by the output device, audio content based on the downmixed first subset of the plurality of channels and the downmixed second subset of the plurality of channels.

Clause 11: The system of Clause 10, wherein the channel selection rule relates to a channel configuration of the plurality of channels.

Clause 12: The system of any one of Clause 10-11, wherein the output device comprises processing-capable headphones, and wherein the one or more sensors comprise an accelerometer, gyroscope, or magnetometer associated with the processing-capable headphones.

Clause 13: The system of any one of Clause 10-12, wherein the instructions, when executed by the one or more processors, further cause the system to aggregate the downmixed first subset of the plurality of channels and the downmixed second subset of the plurality of channels to produce the audio content.

Clause 14: The system of any one of Clause 10-13, wherein the instructions, when executed by the one or more processors, further cause the system to encode, by the source device, the first subset of the plurality of channels and the downmixed second subset of the plurality of channels using an encoding scheme to produce encoded audio content, wherein the transmitting, by the source device, the first subset of the plurality of channels and the downmixed second subset of the plurality of channels to the output device comprises transmitting the encoded audio content.

Clause 15: The system of Clause 14, wherein the instructions, when executed by the one or more processors, further cause the system to decode, by the output device, encoded audio content based on the encoding scheme in order to determine the first subset of the plurality of channels and the downmixed second subset of the plurality of channels.

Clause 16: The system of any one of Clause 14-15, wherein the instructions, when executed by the one or more processors, further cause the system to select the encoding scheme based on a channel configuration of the plurality of channels.

Clause 17: The system of any one of Clause 14-16, wherein the encoded audio content comprises a number of channels equal to or less than a maximum number of channels supported by a transmission technique that is used for the transmitting, by the source device, the first subset of the plurality of channels and the downmixed second subset of the plurality of channels to the output device.

Clause 18: The system of Clause 17, wherein the transmission technique comprises a wireless transmission technique.

Clause 19: A computer readable medium comprising instructions that, when executed by one or more processors of a computing system, cause the computing system to: receive, by a source device, an audio signal comprising a plurality of channels; select, by the source device, a first subset of the plurality of channels as head-tracked channels based on a channel selection rule; perform, by the source device, binaural downmixing on a second subset of the plurality of channels that is different than the first subset of the plurality of channels to produce a downmixed second subset of the plurality of channels; transmit, by the source device, the first subset of the plurality of channels and the downmixed second subset of the plurality of channels to an output device; perform, by the output device, binaural downmixing on the first subset of the plurality of channels based on positional data captured via one or more sensors associated with the output device to produce a downmixed first subset of the plurality of channels; and play, by the output device, audio content based on the downmixed first subset of the plurality of channels and the downmixed second subset of the plurality of channels.

Clause 20: The computer readable medium of clause 19, wherein the channel selection rule relates to a channel configuration of the plurality of channels.

The descriptions of the various embodiments of the presently disclosed techniques have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

In the preceding, reference is made to embodiments presented in this disclosure. However, the scope of the present disclosure is not limited to specific described embodiments. Instead, any combination of the features and elements described herein, whether related to different embodiments or not, is contemplated to implement and practice contemplated embodiments. Furthermore, although embodiments disclosed herein may achieve advantages over other possible solutions or over the prior art, whether or not a particular advantage is achieved by a given embodiment is not limiting of the scope of the present disclosure. Thus, the aspects, features, embodiments and advantages described herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

Aspects of the presently taught approaches may take the form of an entirely hardware embodiment, an entirely software embodiment (including firmware, resident software, microcode, etc.) or an embodiment combining software and hardware aspects that may all generally be referred to herein as a "circuit," "module" or "system."

The presently taught approaches may be provided by way of a system, a method, and/or a computer program product. The computer program product may include a computer readable medium (or media) comprising computer readable program instructions for causing a processor to carry out aspects of the presently taught approaches.

The computer readable medium can be provided by way of a computer readable storage medium and/or a computer-readable transmission medium. A computer-readable storage medium can be a tangible device that can retain and store instructions for use by an instruction execution device. Such a computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire. On the other hand, a computer-readable transmission medium may include carrier waves, transmission signals or the like (including transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire). A computer-readable transmission medium may convey instructions between components of a single computer system and/or between plural separate computer systems.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the presently taught approaches may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the presently taught approaches.

Aspects of the presently taught approaches are described herein with reference to flowchart illustrations and/or block diagrams of methods, apparatus (systems), and computer program products according to embodiments of the presently taught approaches. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various embodiments of the presently taught approaches. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Embodiments of the presently taught approaches may be provided to end users through a cloud computing infrastructure. Cloud computing generally refers to the provision of scalable computing resources as a service over a network. More formally, cloud computing may be defined as a computing capability that provides an abstraction between the computing resource and its underlying technical architecture (e.g., servers, storage, networks), enabling convenient, on-demand network access to a shared pool of configurable computing resources that can be rapidly provisioned and released with minimal management effort or service provider interaction. Thus, cloud computing allows a user to access virtual computing resources (e.g., storage, data, applications, and even complete virtualized computing systems) in "the cloud," without regard for the underlying physical systems (or locations of those systems) used to provide the computing resources.

Typically, cloud computing resources are provided to a user on a pay-per-use basis, where users are charged only for the computing resources actually used (e.g. an amount of storage space consumed by a user or a number of virtualized systems instantiated by the user). A user can access any of the resources that reside in the cloud at any time, and from anywhere across the Internet. Doing so allows a user to access this information from any computing system attached to a network connected to the cloud (e.g., the Internet).

Therefore, from one perspective, there have been described techniques for separating binaural downmixing and head tracking processing between a source device and an output device. Embodiments include receiving, by a source device, an audio signal comprising a plurality of channels and selecting a first subset of the plurality of channels as head-tracked channels. Embodiments include performing, by the source device, binaural downmixing on a second subset of the plurality of channels that is different than the first subset of the plurality of channels to produce a downmixed second subset of the plurality of channels. Embodiments include transmitting, by the source device, the first subset of the plurality of channels and the downmixed second subset of the plurality of channels to an output device. Embodiments include performing, by the output device, binaural downmixing on the first subset of the plurality of channels based on positional data captured via one or more sensors associated with the output device.

Further examples are set out in the following numbered clauses.

Clause 1. A method performed by a computing device, comprising: receiving, by a source device, an audio signal comprising a plurality of channels; selecting, by the source device, a first subset of the plurality of channels as head-tracked channels based on a channel selection rule; performing, by the source device, binaural downmixing on a second subset of the plurality of channels that is different than the first subset of the plurality of channels to produce a downmixed second subset of the plurality of channels; transmitting, by the source device, the first subset of the plurality of channels and the downmixed second subset of the plurality of channels to an output device; performing, by the output device, binaural downmixing on the first subset of the plurality of channels based on positional data captured via one or more sensors associated with the output device to produce a downmixed first subset of the plurality of channels; and playing, by the output device, audio content based on the downmixed first subset of the plurality of channels and the downmixed second subset of the plurality of channels.

Clause 2. The computer-implemented method of clause 1, wherein the channel selection rule relates to a channel configuration of the plurality of channels.

Clause 3. The computer-implemented method of clause 1 or 2, wherein the output device comprises processing-capable headphones, and wherein the one or more sensors comprise an accelerometer, gyroscope, or magnetometer associated with the processing-capable headphones.

Clause 4. The computer-implemented method of clause 1, 2 or 3, further comprising aggregating the downmixed first subset of the plurality of channels and the downmixed second subset of the plurality of channels to produce the audio content.

Clause 5. The computer-implemented method of any preceding clause, further comprising encoding, by the source device, the first subset of the plurality of channels and the downmixed second subset of the plurality of channels using an encoding scheme to produce encoded audio content, wherein the transmitting, by the source device, the first subset of the plurality of channels and the downmixed second subset of the plurality of channels to the output device comprises transmitting the encoded audio content.

Clause 6. The computer-implemented method of clause 5, further comprising decoding, by the output device, encoded audio content based on the encoding scheme in order to determine the first subset of the plurality of channels and the downmixed second subset of the plurality of channels.

Clause 7. The computer-implemented method of clause 5 or 6, further comprising selecting the encoding scheme based on a channel configuration of the plurality of channels.

Clause 8. The computer-implemented method of clause 5, 6 or 7, wherein the encoded audio content comprises a number of channels equal to or less than a maximum number of channels supported by a transmission technique that is used for the transmitting, by the source device, the first subset of the plurality of channels and the downmixed second subset of the plurality of channels to the output device.

Clause 9. The computer-implemented method of clause 8, wherein the transmission technique comprises a wireless transmission technique.

Clause 10. A system, comprising: one or more processors; and a memory storing instructions that, when executed by the one or more processors, cause the system to: receive, by a source device, an audio signal comprising a plurality of channels; select, by the source device, a first subset of the plurality of channels as head-tracked channels based on a channel selection rule; perform, by the source device, binaural downmixing on a second subset of the plurality of channels that is different than the first subset of the plurality of channels to produce a downmixed second subset of the plurality of channels; transmit, by the source device, the first subset of the plurality of channels and the downmixed second subset of the plurality of channels to an output device; perform, by the output device, binaural downmixing on the first subset of the plurality of channels based on positional data captured via one or more sensors associated with the output device to produce a downmixed first subset of the plurality of channels; and play, by the output device, audio content based on the downmixed first subset of the plurality of channels and the downmixed second subset of the plurality of channels.

Clause 11. The system of clause 10, wherein the channel selection rule relates to a channel configuration of the plurality of channels.

Clause 12. The system of clause 10 or 11, wherein the output device comprises processing-capable headphones, and wherein the one or more sensors comprise an accelerometer, gyroscope, or magnetometer associated with the processing-capable headphones.

Clause 13. The system of clause 10, 11 or 12, wherein the instructions, when executed by the one or more processors, further cause the system to aggregate the downmixed first subset of the plurality of channels and the downmixed second subset of the plurality of channels to produce the audio content.

Clause 14. The system of any of clause 10 to 13, wherein the instructions, when executed by the one or more processors, further cause the system to encode, by the source device, the first subset of the plurality of channels and the downmixed second subset of the plurality of channels using an encoding scheme to produce encoded audio content, wherein the transmitting, by the source device, the first subset of the plurality of channels and the downmixed second subset of the plurality of channels to the output device comprises transmitting the encoded audio content.

Clause 15. The system of clause 14, wherein the instructions, when executed by the one or more processors, further cause the system to decode, by the output device, encoded audio content based on the encoding scheme in order to determine the first subset of the plurality of channels and the downmixed second subset of the plurality of channels.

Clause 16. The system of clause 14 or 15, wherein the instructions, when executed by the one or more processors, further cause the system to select the encoding scheme based on a channel configuration of the plurality of channels.

Clause 17. The system of clause 14, 15 or 16, wherein the encoded audio content comprises a number of channels equal to or less than a maximum number of channels supported by a transmission technique that is used for the transmitting, by the source device, the first subset of the plurality of channels and the downmixed second subset of the plurality of channels to the output device.

Clause 18. The system of clause 17, wherein the transmission technique comprises a wireless transmission technique.

Clause 19. A computer readable medium comprising instructions that, when executed by one or more processors of a computing system, cause the computing system to: receive, by a source device, an audio signal comprising a plurality of channels; select, by the source device, a first subset of the plurality of channels as head-tracked channels based on a channel selection rule; perform, by the source device, binaural downmixing on a second subset of the plurality of channels that is different than the first subset of the plurality of channels to produce a downmixed second subset of the plurality of channels; transmit, by the source device, the first subset of the plurality of channels and the downmixed second subset of the plurality of channels to an output device; perform, by the output device, binaural downmixing on the first subset of the plurality of channels based on positional data captured via one or more sensors associated with the output device to produce a downmixed first subset of the plurality of channels; and play, by the output device, audio content based on the downmixed first subset of the plurality of channels and the downmixed second subset of the plurality of channels.

Clause 20. The computer readable medium of clause 19, wherein the channel selection rule relates to a channel configuration of the plurality of channels.

While the foregoing is directed to embodiments of the presently taught approaches, other and further embodiments of the presently taught approaches may be devised without departing from the basic scope thereof, and the scope is set out by the claims that follow.

## Claims

1. A method performed by a computing device, comprising:
receiving, by a source device, an audio signal comprising a plurality of channels;
selecting, by the source device, a first subset of the plurality of channels as head-tracked channels based on a channel selection rule;
performing, by the source device, binaural downmixing on a second subset of the plurality of channels that is different than the first subset of the plurality of channels to produce a downmixed second subset of the plurality of channels;
transmitting, by the source device, the first subset of the plurality of channels and the downmixed second subset of the plurality of channels to an output device;
performing, by the output device, binaural downmixing on the first subset of the plurality of channels based on positional data captured via one or more sensors associated with the output device to produce a downmixed first subset of the plurality of channels; and
playing, by the output device, audio content based on the downmixed first subset of the plurality of channels and the downmixed second subset of the plurality of channels.

2. The computer-implemented method of claim 1, wherein the channel selection rule relates to a channel configuration of the plurality of channels.

3. The computer-implemented method of claim 1 or 2, wherein the output device comprises processing-capable headphones, and wherein the one or more sensors comprise an accelerometer, gyroscope, or magnetometer associated with the processing-capable headphones.

4. The computer-implemented method of claim 1, 2 or 3, further comprising aggregating the downmixed first subset of the plurality of channels and the downmixed second subset of the plurality of channels to produce the audio content.

5. The computer-implemented method of any preceding claim, further comprising encoding, by the source device, the first subset of the plurality of channels and the downmixed second subset of the plurality of channels using an encoding scheme to produce encoded audio content, wherein the transmitting, by the source device, the first subset of the plurality of channels and the downmixed second subset of the plurality of channels to the output device comprises transmitting the encoded audio content.

6. The computer-implemented method of claim 5, further comprising decoding, by the output device, encoded audio content based on the encoding scheme in order to determine the first subset of the plurality of channels and the downmixed second subset of the plurality of channels.

7. The computer-implemented method of claim 5 or 6, further comprising selecting the encoding scheme based on a channel configuration of the plurality of channels.

8. The computer-implemented method of claim 5, 6 or 7, wherein the encoded audio content comprises a number of channels equal to or less than a maximum number of channels supported by a transmission technique that is used for the transmitting, by the source device, the first subset of the plurality of channels and the downmixed second subset of the plurality of channels to the output device.

9. The computer-implemented method of claim 8, wherein the transmission technique comprises a wireless transmission technique.

10. A system, comprising:
one or more processors; and
a memory storing instructions that, when executed by the one or more processors, cause the system to:
receive, by a source device, an audio signal comprising a plurality of channels;
select, by the source device, a first subset of the plurality of channels as head-tracked channels based on a channel selection rule;
perform, by the source device, binaural downmixing on a second subset of the plurality of channels that is different than the first subset of the plurality of channels to produce a downmixed second subset of the plurality of channels;
transmit, by the source device, the first subset of the plurality of channels and the downmixed second subset of the plurality of channels to an output device;
perform, by the output device, binaural downmixing on the first subset of the plurality of channels based on positional data captured via one or more sensors associated with the output device to produce a downmixed first subset of the plurality of channels; and
play, by the output device, audio content based on the downmixed first subset of the plurality of channels and the downmixed second subset of the plurality of channels.

11. The system of claim 10, wherein the channel selection rule relates to a channel configuration of the plurality of channels.

12. The system of claim 10 or 11, wherein the output device comprises processing-capable headphones, and wherein the one or more sensors comprise an accelerometer, gyroscope, or magnetometer associated with the processing-capable headphones.

13. The system of claim 10, 11 or 12, wherein the instructions, when executed by the one or more processors, further cause the system to aggregate the downmixed first subset of the plurality of channels and the downmixed second subset of the plurality of channels to produce the audio content.

14. The system of any of claims 10 to 13, wherein the instructions, when executed by the one or more processors, further cause the system to perform functionality corresponding to the method of any of claims 5 to 9.

15. A computer readable medium comprising instructions that, when executed by one or more processors of a computing system, cause the computing system to become configured to perrfom the method of any of claims 1 to 9.
